(19) Europäisches Patentamt / European Patent Office / Office européen des brevets

(11) EP 1 903 380 B1

(12) **EUROPEAN PATENT SPECIFICATION**

(45) Date of publication and mention
of the grant of the patent:
**27.11.2013 Bulletin 2013/48**

(51) Int Cl.:
***G02F 1/13357*** *(2006.01)*

(21) Application number: **06120959.9**

(22) Date of filing: **20.09.2006**

(54) **Backlight source for LCD comprising an arrangement matrix of primary color LEDs**

**LCD-Hintergrundbeleuchtung mit Matrixanordnung von LEDs mit Primärfarben**

**Rétroéclairage d'un afficheur à cristaux liquides comprenant une arrangement matriciel de LEDs à couleurs primaires**

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**26.03.2008 Bulletin 2008/13**

(73) Proprietor: **Everlight Electronics Co., Ltd.
Tu Chen City, Taipei Hsien (TW)**

(72) Inventors:
• **Wen, Chung-Han
No. 25, Lane 76, Sec. 3
Taipei Hsien (TW)**

• **Liu, Pang-Yen
3F, No. 1, Lane 56
Taipei County 236 (TW)**

(74) Representative: **Viering, Jentschura & Partner
Grillparzerstrasse 14
81675 München (DE)**

(56) References cited:
**EP-A- 1 143 288      EP-A- 1 640 792
WO-A2-02/079862**

## Description

## BACKGROUND

Field of Invention

The present invention relates to an arrangement matrix of primary color LEDs applied in the back light module of the liquid crystal display.

Description of Related Art

The backlight module is operated with the light of the backlight source being guided to form a planar light source by a light guiding sheet. Common backlight sources include the cold cathode fluorescent tube, the light emitting diodes (LED), etc. The cold cathode fluorescent tube dominants the market nowadays while the requirement of the LED increases gradually. Comparing with the cold cathode fluorescent tube, the LED has the advantages of the small size, the long life, the low driving voltage, the low power consumption, and the robustness against shock.

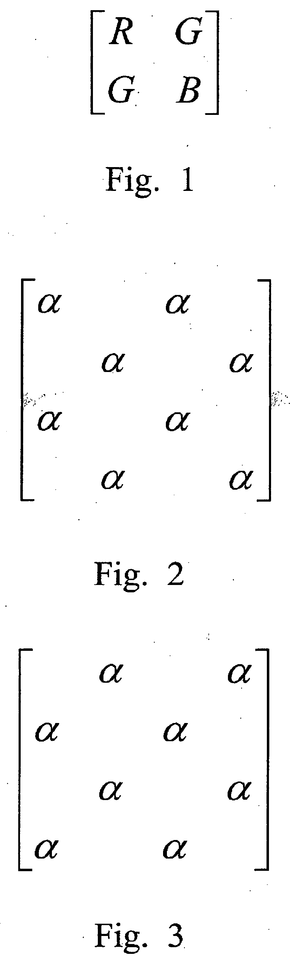

Generally speaking, the LED backlight source usually adopts the white LED directly, or the mixed white light generated from the lights of three primary colors: red, green and blue (RGB). Because of the low degree of saturation of the white light emitted by the white LED, most LED backlight modules utilized by the television sets adopt the three primary color lights (RGB) to mix and generate white light in accordance. Please refer to Fig. 1,which illustrates an arrangement matrix of primary color LEDs in the prior art. In Fig. 1, the arrangement matrix is composed of 2X2 matrixes, which is the lowest repeated matrix. As illustrated in Fig. 1, the number of green LEDs is two times of the number of the red LED and the number of the blue LED. Within the lowest matrix unit, one of the green LEDs is located at column 1, row 2, and the other is located at column 2, row 1. The red LED and the blue LED are located at column 1, row 1, and at column 2, row 2, respectively.

The aforementioned RGB arrangement matrix is the lowest repeat unit of the LED backlight source in the prior art. The number of the repeat units to compose the LED backlight source is adjusted according to the size of the required backlight source. Usually, in the backlight module, a plurality of optical diaphragms of different functions, such as a diffuse plate, a focusing sheet, etc., are adopted at a distance of 2-5 cm from the LED backlight source in order to increase the lightness of the backlight module. However, due to the limitation of the mixing distance from the LED backlight source to the optical diaphragm, as being adopted as the LED backlight source, the RGB arrangement matrix in the prior art can generate uniform white light only in the central area, but not in the circumferential area. If the mixing distance is increased further, not only the chromatic polarization is generated around the peripheral of the LED panel, but the volume of the backlight module is increased. If the mixing distance is decreased, not only the horizontal stripe chromatic polarization is generated, but the problem of chromatic polarization deteriorates at the same time. Hence, it becomes one of the most important issues to effectively mix the RGB arrangement to generate the white light, and to efficiently generate the uniform white light.

WO 02/079862 describes a system for backlighting a liquid crystal display consisting of a planar array of uniformly distributed light emitting diodes (LEDs) with segmentation, each LED illuminating one or more colors of a picture element (pixel) or group of pixels.

Further, WO 2007/149362 was found in a search of the state of the art in accordance with Article 54(3) EPC. It describes a light emitting device comprising a first bottom substrate, a second bottom substrate, a first bare die light emitting diode device, a second bare die light emitting diode device, and a top substrate.

For the forgoing reasons, there is a need for a novel RGB arrangement aligning to overcome the aforementioned drawbacks.

## SUMMARY

The present invention is directed to an arrangement matrix of primary color light emitting diodes (LEDs), able to mix the three primary colors to generate not only a uniform white light but totally a uniform white light within a short distance from the backlight source to the optical diaphragm.

It is therefore an aspect of the present invention to provide a backlight source for an LCD display as defined in claim 1, comprising an arrangement matrix of primary color light emitting diodes (LEDs). The arrangement matrix of primary color LEDs is applied in a backlight source of an LCD. The matrix includes the first LEDs, the second LEDs and the third LEDs. The first LEDs, the second LEDs and the third LEDs are arranged to form a 4x4 matrix unit, with the 4x4 matrix unit being the lowest repeat matrix unit. The ratio of the numbers of the first LEDs, the second LEDs and the third LEDs is 2:1:1. There are two of the first LEDs, not adjacent to each other, located in each row and in each column of each lowest matrix unit respectively. And there are one of the second LEDs and one of the third LEDs located in each row and in each column of each lowest matrix unit respectively.

According to the present invention, the first LEDs, the second LEDs and the third LEDs that are mentioned above emit lights of the three primary colors (red, blue and green) separately. With the first LED, the second LED and the third LED represented by $\alpha$, $\beta$ and $\gamma$, a preferred arrangement of the lowest matrix unit is as below:

$$\begin{bmatrix} \alpha & \beta & \alpha & \gamma \\ \gamma & \alpha & \beta & \alpha \\ \alpha & \gamma & \alpha & \beta \\ \beta & \alpha & \gamma & \alpha \end{bmatrix}.$$

Further, the locations of the second LEDs β and the locations of the third LEDs γ are interchanged while the locations of the first LEDs α remain the same.

According to another preferred embodiment of the present invention, the locations of the first LEDs α in the matrix can be altered as shown below:

$$\begin{bmatrix} \beta & \alpha & \gamma & \alpha \\ \alpha & \gamma & \alpha & \beta \\ \gamma & \alpha & \beta & \alpha \\ \alpha & \beta & \alpha & \gamma \end{bmatrix}.$$

According to the other preferred embodiment of the present invention, the locations of the second LEDs β and the locations of the third LEDs γ are interchanged while the locations of the first LEDs α remain the same.

Hence by adopting the arrangement matrix of primary color LEDs of the present invention, the backlight source can generate white light uniformly to reduce the chromatic polarization at the peripheral with the distance from the backlight source to the optical diaphragm between 15 mm to 25 mm. Moreover, the present invention may generate totally uniform white light.

These and other features, aspects, and advantages of the present invention will become better understood with reference to the following description, figures, and appended claims.

It is to be understood that both the foregoing general description and the following detailed description are by examples, and are intended to provide further explanation of the invention as claimed.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 is a diagram of an arrangement matrix of primary color LEDs according to the prior art;
Fig. 2-3 are diagrams of an arrangement matrix of the first LEDs according to a preferred embodiment of the present invention; and
Fig. 4-7 are diagrams of an arrangement matrix of the primary color LEDs according to a preferred embodiment of the present invention.

DESCRIPTION OF THE PREFERRED EMBODIMENTS

An arrangement matrix of primary color light emitting diodes (LEDs) is herein introduced to solve the problems in the prior art. Reference will now be made in detail to the present preferred embodiments of the invention, examples of which are illustrated in the accompanying drawings. Wherever possible, the same reference numbers are used in the drawings and the description to refer to the same or like parts.

The arrangement matrix of primary colors (RGB) LEDs of the present invention, for generating white light uniformly, is composed of the first LEDs, the second LEDs and the third LEDs. A 4x4 matrix is defined as a lowest matrix unit. The ratio of the numbers of the first LEDs, the second LEDs and the third LEDs is 2:1:1. Each of the lights emitted by the first LEDs, the second LEDs and the third LEDs is one of the three primary colors.

In the aforementioned lowest matrix unit, there are two of the first LEDs located in each column and each row respectively, and the two of the first LEDs are not adjacent to each other. The first LED is represented by α. Please refer to Fig. 2 to 3, which illustrate diagrams of the matrixes having the first LEDs of the preferred embodiments of the present invention. As displayed in Fig. 2, the first LEDs α are located at [1,1], [1, 3], [2, 2], [2, 4], [3, 1], [3, 3], [4, 2] and [4, 4]. That is, there are two of the first LEDs α located within each column and each row, and the first LEDs α in the lowest matrix unit are not adjacent to one another.

Alternately, the first LEDs α may be arranged as shown in Fig. 3 if required. As illustrated in Fig. 3, the first LEDs α are located at [1, 2], [1, 4], [2, 1], [2, 3], [3, 2], [3, 4], [4, 1] and [4, 3].

The details of the preferred embodiment of the present invention are described below respectively. There are four different preferred arrangement matrixes of the present invention, wherein the four different preferred arrangement matrixes should not limit any possibility of the present invention. Please note that the first LED, the second LED and the third LED are represented by α, β and γ, respectively.

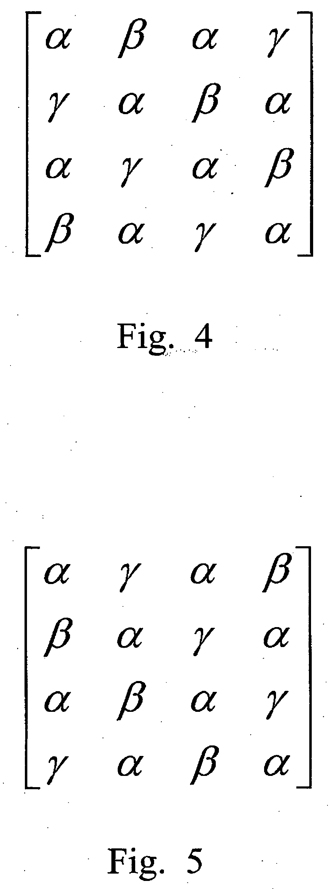

In one preferred embodiment of the present invention, the second LEDs and the third LEDs are arranged as the arrangement matrix shown in Fig. 2. Please refer to Fig. 4, an arrangement matrix of primary color RGB LEDs according to a preferred embodiment of the present invention is illustrated. Please also refer to Fig. 2 and Fig. 4, the second LEDs β are located at [1, 2], [2, 3], [3, 4] and [4, 1]. That is, there is one of the second LED β located within each column and each row. The second LEDs β are filled in the first void space from the left of the first column and the fourth column (i.e., at [1, 2] and [4, i]), and filled in the second void space from the left of the second column and the third column (i.e., at [2, 3] and [3, 4]).

Please also refer to Fig. 2 and Fig. 4 again, the third LEDs γ are located at [1, 4], [2, 1], [3, 2] and [4, 3]. That is, there is one of the third LED γ located within each column and each row. The third LEDs γ are filled in the second void space from the left of the first column and the second void space from the left of the fourth column (i.e., at [1, 4] and [4, 3]) in Fig. 2, and filled in the first void space from the left of the second column and the third column (i.e., at [2, 1] and [3, 2]) in Fig. 2.

According to another preferred embodiment of the present invention, the locations of the second LEDs β and the locations of the third LEDs γ are interchanged while the locations of the first LEDs α remain the same. Please refer to Fig. 2 and Fig. 5, the second LEDs β are located at [1, 4], [2, 1], [3, 2] and [4, 3]. That is, the second LEDs β are filled in the second void space from the left of the first column and the fourth column (i.e., at [1, 4] and [4, 3]) in Fig. 2, and filled in the first void space from the left of the second column and the third column (i.e., at [2, 1] and [3, 2]) in Fig. 2. Meanwhile, the third LEDs γ are located at [1, 2], [2, 3], [3, 4] and [4, 1], as illustrated in Fig. 2 and Fig. 5. That is, the third LEDs γ are filled in the first void space from the left of the first column and the fourth column (i.e., at [1, 2] and [4, 1]) in Fig. 2, and filled in the second void space from the left of the second column and the third column (i.e., at [2, 3] and [3, 4]) in Fig. 2.

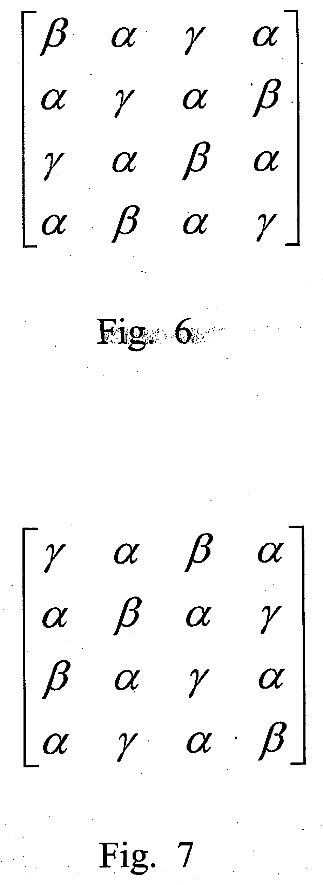

According to still another preferred embodiment of the present invention, the second LEDs and the third LEDs are arranged in the arrangement matrix as shown in Fig.3. Please refer to Fig. 6, a diagram of an arrangement matrix of RGB primary colors LEDs according to the still another preferred embodiment of the present invention is illustrated. Please refer to Fig. 3 and Fig. 6, the second LEDs β are located at [1, 1], [2, 4], [3, 3] and [4, 2]. That is, there is a second LED β located within each column and each row. The second LEDs β are filled in the first space from the left of the first column and the fourth column (i.e., at [1, 1] and [4, 2]) in Fig. 3, and filled in the second space from the left of the second column and the third column (i.e., at [2, 4] and [3, 3]) in Fig. 3.

Please refer to Fig 3 and Fig. 6, the third LEDs γ are located at [1, 3], [2, 2], [3, 1] and [4, 4]. That is, there is a third LED γ located within each column and each row. The third LEDs γ are filled in the second space from the left of the first column and the fourth column (i.e., at [1, 3] and [4, 4]) in Fig. 3, and filled in the first space from the left of the second column and the third column (i.e., at [2, 2] and [3, 1]) in Fig. 3.

In a further preferred embodiment of the present invention, the locations of the second LEDs β and the locations of the third LEDs γ are further interchanged while the locations of the first LEDs α remain the same.

As illustrated in Fig. 7, the second LEDs β are located at [1, 3], [2, 2], [3, 1] and [4, 4], while the third LEDs γ are located at [1, 1], [2, 4], [3, 3] and [4, 2].

Therefore, the arrangement matrix of the primary colors of the present invention may be utilized to generate white light uniformly with a distance from the backlight source to the optical diaphragm between 15 mm and 25 mm, such that the problem of the chromatic polarization at peripheral areas may be reduced. Further, the present invention may be applied for generate the uniform white light in full.

It will be apparent to those skilled in the art that various modifications and variations can be made to the structure of the present invention, provided they fall within the scope of the following claims.

**Claims**

1. A backlight source for a LCD display, the backlight source comprising a plurality of lowest matrix repeat units of primary color light emitting diodes, LEDs, wherein:

    each of the matrix units comprises first LEDs of a first primary color, second LEDs of a second primary color and third LEDs of a third primary color forming a 4x4 matrix, and the ratio of the numbers of the first LEDs, the second LEDs and the third LEDs is 2:1:1; there are two of the first LEDs,
    not adjacent to each other, located in each row and in each column respectively of each matrix unit; and there are one of the second LEDs and one of the third LEDs located in each row and in each column respectively of each matrix unit, wherein the first LEDs, the second LEDs and the third LEDs are respectively red LEDs, blue LEDs and green LEDs.

2. The backlight source of claim 1, wherein the first LED, the second LED and the third LED are respectively represented by α, β and γ, and each of the matrix units is arranged as below:

$$\begin{bmatrix} \alpha & \beta & \alpha & \gamma \\ \gamma & \alpha & \beta & \alpha \\ \alpha & \gamma & \alpha & \beta \\ \beta & \alpha & \gamma & \alpha \end{bmatrix}.$$

3. The backlight source of claim 1, wherein the first LED, the second LED and the third LED are respectively represented by α, β and γ, and each of the matrix units is arranged as below:

$$\begin{bmatrix} \alpha & \gamma & \alpha & \beta \\ \beta & \alpha & \gamma & \alpha \\ \alpha & \beta & \alpha & \gamma \\ \gamma & \alpha & \beta & \alpha \end{bmatrix}.$$

**4.** The backlight source of claim 1, wherein the first LED, the second LED and the third LED are respectively represented by $\alpha$, $\beta$ and $\gamma$, and each of the matrix units is arranged as below:

$$\begin{bmatrix} \beta & \alpha & \gamma & \alpha \\ \alpha & \gamma & \alpha & \beta \\ \gamma & \alpha & \beta & \alpha \\ \alpha & \beta & \alpha & \gamma \end{bmatrix}.$$

**5.** The backlight source of claim 1, wherein the first LED, the second LED and the third LED are respectively represented by $\alpha$, $\beta$ and $\gamma$, and each of the matrix units is arranged as below:

$$\begin{bmatrix} \gamma & \alpha & \beta & \alpha \\ \alpha & \beta & \alpha & \gamma \\ \beta & \alpha & \gamma & \alpha \\ \alpha & \gamma & \alpha & \beta \end{bmatrix}.$$

**6.** The backlight source of claim 1, further comprising an optical diaphragm, wherein the distance from the matrix unit to the optical diaphragm is between 15 mm and 25 mm.

**Patentansprüche**

**1.** Eine Hintergrundbeleuchtungsquelle für eine LCD-Anzeige, wobei die Hintergrundbeleuchtungsquelle eine Mehrzahl von niedrigste-Matrix-Wiederholungseinheiten von Primärfarblicht-emittierenden Dioden, LEDs, aufweist, wobei jede der Matrixeinheiten aufweist: erste LEDs einer ersten Primärfarbe, zweite LEDs einer zweiten Primärfarbe und dritte LEDs einer dritten Primärfarbe, die eine 4x4-Matrix ausbilden, und wobei das Verhältnis der Anzahlen der ersten LEDs, der zweiten LEDs und der dritten LEDs 2:1:1 beträgt, wobei zwei der ersten LEDs, die nicht benachbart zueinander sind, in jeder Reihe bzw. in jeder Spalte jeder Matrixeinheit angeordnet sind, und wobei eine der zweiten LEDs und eine der dritten LEDs in jeder Reihe bzw. in jeder Spalte jeder Matrixeinheit angeordnet sind, wobei die ersten LEDs, die zweiten LEDs und die dritten LEDs jeweils rote LEDs, blaue LEDs und grüne LEDs sind.

**2.** Die Hintergrundbeleuchtungsquelle gemäß Anspruch 1, wobei die erste LED, die zweite LED und die dritte LED jeweils durch $\alpha$, $\beta$ und $\gamma$ dargestellt sind, und wobei jede der Matrixeinheiten wie folgt angeordnet ist:

$$\begin{bmatrix} \alpha & \beta & \alpha & \gamma \\ \gamma & \alpha & \beta & \alpha \\ \alpha & \gamma & \alpha & \beta \\ \beta & \alpha & \gamma & \alpha \end{bmatrix}.$$

**3.** Die Hintergrundbeleuchtungsquelle gemäß Anspruch 1, wobei die erste LED, die zweite LED und die dritte LED jeweils durch $\alpha$, $\beta$ und $\gamma$ dargestellt sind, und wobei jede der Matrixeinheiten wie folgt dargestellt ist:

$$\begin{bmatrix} \alpha & \gamma & \alpha & \beta \\ \beta & \alpha & \gamma & \alpha \\ \alpha & \beta & \alpha & \gamma \\ \gamma & \alpha & \beta & \alpha \end{bmatrix}.$$

**4.** Die Hintergrundbeleuchtungsquelle gemäß Anspruch 1, wobei die erste LED, die zweite LED und die dritte LED jeweils durch $\alpha$, $\beta$ und $\gamma$ dargestellt sind, und wobei jede der Matrixeinheiten wie folgt dargestellt ist:

$$\begin{bmatrix} \beta & \alpha & \gamma & \alpha \\ \alpha & \gamma & \alpha & \beta \\ \gamma & \alpha & \beta & \alpha \\ \alpha & \beta & \alpha & \gamma \end{bmatrix}.$$

**5.** Die Hintergrundbeleuchtungsquelle gemäß Anspruch 1, wobei die erste LED, die zweite LED und die dritte LED jeweils durch $\alpha$, $\beta$ und $\gamma$ dargestellt sind, und wobei jede der Matrixeinheiten wie folgt dargestellt ist:

$$\begin{bmatrix} \gamma & \alpha & \beta & \alpha \\ \alpha & \beta & \alpha & \gamma \\ \beta & \alpha & \gamma & \alpha \\ \alpha & \gamma & \alpha & \beta \end{bmatrix}.$$

**6.** Die Hintergrundbeleuchtungsquelle gemäß Anspruch 1, ferner eine optische Membran aufweisend, wobei der Abstand von der Matrixeinheit zu der optischen Membran zwischen 15 mm und 25 mm liegt.

**Revendications**

**1.** Source de rétroéclairage pour un afficheur à cristaux liquides, la source de rétroéclairage comprenant une pluralité d'unités de répétition matricielles du plus bas niveau de diodes électroluminescentes, DEL, de couleurs primaires, dans laquelle :

chacune des unités matricielles comprend des premières DEL d'une première couleur primaire, des deuxièmes DEL d'une deuxième couleur primaire et des troisièmes DEL d'une troisième couleur primaire formant une matrice 4x4, et le rapport des nombres des premières DEL, des deuxièmes DEL et des troisièmes DEL est 2:1:1 ;
on trouve deux des premières DEL, non adjacentes l'une à l'autre, situées respectivement sur chaque ligne et dans chaque colonne de chaque unité matricielle ;
et on trouve une des deuxièmes DEL et une des troisièmes DEL situées respectivement sur chaque ligne et dans chaque colonne de chaque unité matricielle, dans laquelle les premières DEL, les deuxièmes DEL et les troisièmes DEL sont respectivement des DEL rouges, des DEL bleues et des DEL vertes.

**2.** Source de rétroéclairage selon la revendication 1, dans laquelle la première DEL, la deuxième DEL et la troisième DEL sont représentées respectivement par $\alpha$, $\beta$ et $\gamma$ et chacune des unités matricielles est agencée de la manière suivante :

$$\begin{bmatrix} \alpha & \beta & \alpha & \gamma \\ \gamma & \alpha & \beta & \alpha \\ \alpha & \gamma & \alpha & \beta \\ \beta & \alpha & \gamma & \alpha \end{bmatrix}.$$

**3.** Source de rétroéclairage selon la revendication 1, dans laquelle la première DEL, la deuxième DEL et la troisième DEL sont représentées respectivement par $\alpha$, $\beta$ et $\gamma$ et chacune des unités matricielles est agencée de la manière suivante :

$$\begin{bmatrix} \alpha & \gamma & \alpha & \beta \\ \beta & \alpha & \gamma & \alpha \\ \alpha & \beta & \alpha & \gamma \\ \gamma & \alpha & \beta & \alpha \end{bmatrix}.$$

**4.** Source de rétroéclairage selon la revendication 1, dans laquelle la première DEL, la deuxième DEL et la troisième DEL sont représentées respectivement par $\alpha$, $\beta$ et $\gamma$ et chacune des unités matricielles est agencée de la manière suivante :

$$\begin{bmatrix} \beta & \alpha & \gamma & \alpha \\ \alpha & \gamma & \alpha & \beta \\ \gamma & \alpha & \beta & \alpha \\ \alpha & \beta & \alpha & \gamma \end{bmatrix}.$$

**5.** Source de rétroéclairage selon la revendication 1, dans laquelle la première DEL, la deuxième DEL et la troisième DEL sont représentées respectivement par $\alpha$, $\beta$ et $\gamma$ et chacune des unités matricielles est agencée de la manière suivante :

$$\begin{bmatrix} \gamma & \alpha & \beta & \alpha \\ \alpha & \beta & \alpha & \gamma \\ \beta & \alpha & \gamma & \alpha \\ \alpha & \gamma & \alpha & \beta \end{bmatrix}.$$

6. Source de rétroéclairage selon la revendication 1, comprenant en outre un diaphragme optique, dans laquelle la distance de l'unité matricielle au diaphragme optique est entre 15 mm et 25 mm.

$$\begin{bmatrix} R & G \\ G & B \end{bmatrix}$$

Fig. 1

$$\begin{bmatrix} \alpha & & \alpha & \\ & \alpha & & \alpha \\ \alpha & & \alpha & \\ & \alpha & & \alpha \end{bmatrix}$$

Fig. 2

$$\begin{bmatrix} & \alpha & & \alpha \\ \alpha & & \alpha & \\ & \alpha & & \alpha \\ \alpha & & \alpha & \end{bmatrix}$$

Fig. 3

$$\begin{bmatrix} \alpha & \beta & \alpha & \gamma \\ \gamma & \alpha & \beta & \alpha \\ \alpha & \gamma & \alpha & \beta \\ \beta & \alpha & \gamma & \alpha \end{bmatrix}$$

Fig. 4

$$\begin{bmatrix} \alpha & \gamma & \alpha & \beta \\ \beta & \alpha & \gamma & \alpha \\ \alpha & \beta & \alpha & \gamma \\ \gamma & \alpha & \beta & \alpha \end{bmatrix}$$

Fig. 5

$$
\begin{bmatrix}
\beta & \alpha & \gamma & \alpha \\
\alpha & \gamma & \alpha & \beta \\
\gamma & \alpha & \beta & \alpha \\
\alpha & \beta & \alpha & \gamma
\end{bmatrix}
$$

Fig. 6

$$
\begin{bmatrix}
\gamma & \alpha & \beta & \alpha \\
\alpha & \beta & \alpha & \gamma \\
\beta & \alpha & \gamma & \alpha \\
\alpha & \gamma & \alpha & \beta
\end{bmatrix}
$$

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02079862 A

- WO 2007149362 A